# EUROPEAN PATENT APPLICATION

(11) **EP 1 154 384 A2**
(43) Date of publication of application: **14.11.2001**
(21) Application number: 01300683.8
(22) Date of filing: 25.01.2001
(51) Int. Cl.: G07F 17/16, H04L 12/14, H04M 15/00

(54) **Accounting system, accounting method, content executing device, accounting monitoring device, accounting control device and recording medium**

(30) Priority: 28.04.2000 JP 2000131441
(71) Applicant: FUJITSU LIMITED, Kawasaki-shi, Kanagawa 211-8588 (JP)
(72) Inventor: Ikuta, Tatsuhiko, c/o Fujitsu Personal System Ltd., Chiyoda-ku, Tokyo 101-8557 (JP)
(74) Representative: Stebbing, Timothy Charles

(57) **Abstract**

A monitoring module reports registration certification to an accounting server (2) from a terminal device (4-i) when contents determined as a target to be charged for are accessed in the terminal device which is previously registered in the accounting server. The accounting server confirms properlity of the registration certification in the accounting server, and performs fee charging. The application program, when the properlity of the registration certification is confirmed, reports permission of access to the contents from the accounting server to the terminal device, and enabling the contents to be accessed in the terminal device.

## Description

### BACKGROUND OF THE INVENTION

### 1. Field of the Invention

The present invention relates to an accounting system, an accounting method, a content executing device, an accounting monitoring device, an accounting control device and a recording medium, and, in particular, to an accounting system, an accounting method, a content executing device, an accounting monitoring device, an accounting control device and a recording medium which enable various accounting settings for use of software at a terminal.

Recently, as a performance of a personal computer is being improved, a high-grade information processing such as 3D image processing is enabled. However, software for 3D image processing is costly, and is not one which a user can buy and use casually. Further, grading up of software is frequently performed, and, therefore, when software of newest version is attempted to use, it is necessary to buy software for grading up each time the grading up is made. Such a manner of using software is not one providing a good cost-to-performance ratio to a user who doesn't use the software frequently, and such software is not one which a user can easily use.

Accordingly, a method of charging for a time for which software is used is demanded.

### 2. Description of the Related Art

In the related art, when software is provided and used, a recording medium storing the software therein is bought by a customer, and the software is installed in a terminal device of the customer and is executed therein. Alternatively, the terminal device is connected to a server via a network, and data is transmitted to the server which then executes a program using the data.

However, in a case where a user who does not use software frequently uses expensive software such as a 3D image processing program, such manners in the related art are not ones providing a good cost-to-performance ratio to the user. Further, in a case where charging is made for a use time by communication, a communication charge increases because communication should be continued during the use of software, and a time required for the information processing increases because a time required for the communication is included therein.

### SUMMARY OF THE INVENTION

The present invention has been devised in consideration of the above-mentioned matters, and, an object of the present invention is to provide an accounting system, an accounting method, a content executing device, an accounting monitoring device, an accounting control device and a recording medium by which accounting or charging can be performed without performing useless communication.

According to the present invention, when accessing to contents to be charged for occurs in a terminal device, a license file is checked. Then, when an access permitting condition therefor is satisfied as a result of the check, the accessing to the contents is permitted. However, when the access permitting condition is not satisfied as a result of the check, a certificate and information for identifying the contents to be charged for are transmitted to an accounting server. Then, when the certificate is verified by the accounting server, the license file is updated, also, fee charging is performed, and, then, an application program is allowed to access the contents.

Thereby, communication with the accounting server is made only when the application program is started, and the accessing to the contents from the application program is permitted as a result of fee charging being performed and the license file being updated. Accordingly, it is possible to reduce the communication between the terminal device and accounting server to the limit. Thereby, it is possible to reduce the communication charge to be paid by the user who uses the contents.

Other objects and further features of the present invention will become more apparent from the following detailed description when read in conjunction with the accompanying drawings.

### BRIEF DESCRIPTION OF THE DRAWINGS

FIG. 1 shows a system configuration of an embodiment of the present invention;
FIG. 2 shows a block diagram of an accounting server shown in FIG. 1;
FIG. 3 shows a data configuration of a customer database shown in FIG. 2;
FIG. 4 shows a data configuration of a used-condition database shown in FIG. 2;
FIG. 5 shows a block diagram of a terminal device shown in FIG. 1;
FIG. 6 shows a flow chart of operations at a time of registration in the embodiment of the present invention;
FIG. 7 shows a member registration picture in the embodiment of the present invention;
FIG. 8 illustrates operations at a time of executing an application program in the embodiment of the present invention; and
FIG. 9 shows a data configuration of accounting information shown in FIG. 8.

### DETAILED DESCRIPTION OF THE PREFERRED EMBODIMENT

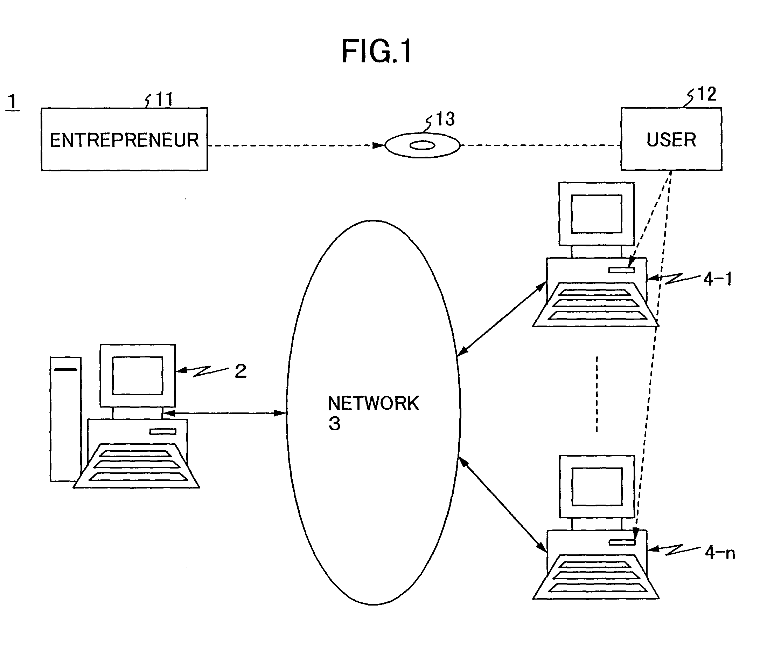

FIG. 1 shows a system configuration of one embodiment of the present invention.

A system 1 in the embodiment of the present invention includes an accounting server 2, a network 3 and terminal devices 4-1 through 4-n. An entrepreneur 11 previously provides recording media 13 to users 12 of the terminal devices 4-1 through 4-n. In the recording media 13, programs which are provided from the entrepreneur 11 to the users 12 are recorded. The programs provided include application programs and monitoring modules which monitor uses of the application programs.

The accounting server 2 will now be described.

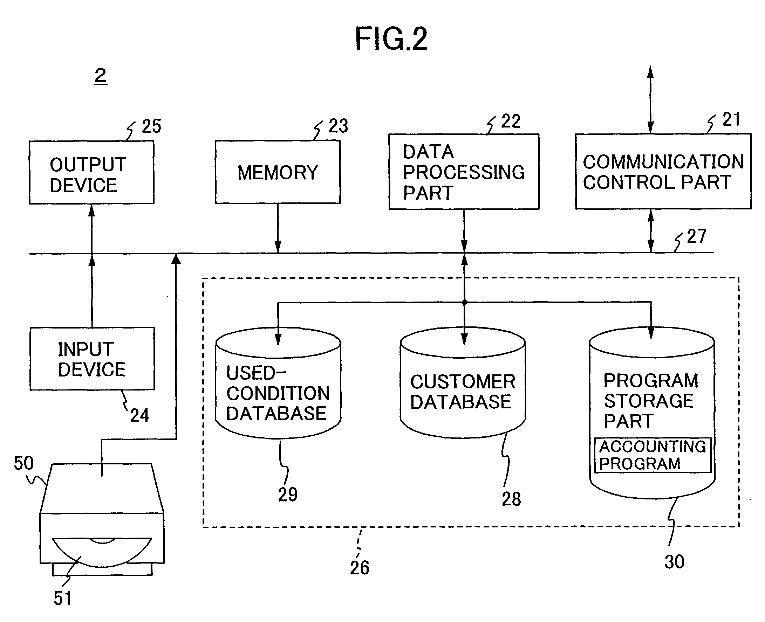

FIG. 2 shows a block diagram of the accounting server 2.

The accounting server 2 includes a communication control part 21, a data processing part 22, a memory 23, an input device 24, an output device 25, a storage device 26, a CD-ROM drive 51 and a bus 27.

The communication control part 21 is connected to the network 3, and controls communication with the network 3. The data processing part 22 performs accounting or charging based on accounting information provided by the terminal devices 4-1 through 4-n via the network 3. The memory 23 is used as a working area for the data processing part 22.

The input device 24 includes a keyboard, a mouse, and so forth, and is used for the entrepreneur 11 to input instructions for processing to be performed by the data processing part 22. The output device 25 includes a display device, a printer and so fourth, and outputs processing results from the data processing part 22.

The storage device 26 includes a customer database 28, a used-condition database 29 and a program storage part 30. The bus 27 transmits control signals and data between the communication control part 21, data processing part 22, memory 23, input device 24, output device 25, storage device 26 and CD-ROM drive 50.

A CD-ROM 51 is loaded in the CD-ROM drive 50. The CD-ROM drive 50 reads an accounting program stored in the CD-ROM 51.

The customer database 28 will now be described in detail. Information concerning the users 12 is stored in the customer database 28.

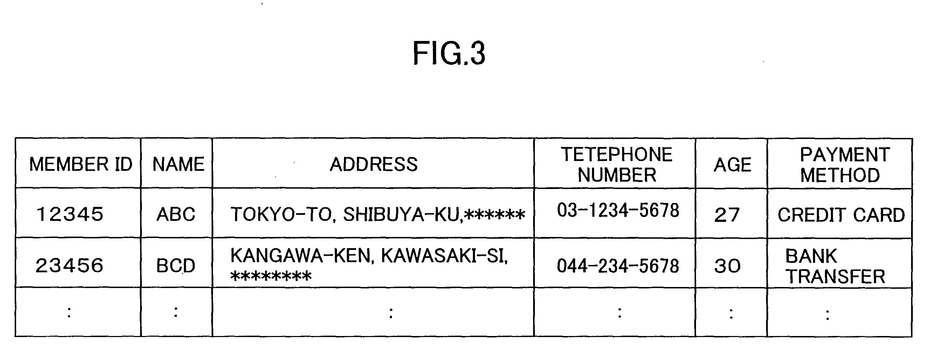

FIG. 3 shows a data configuration of the customer database 28.

As shown in FIG. 3, information such as a member ID, a name, an address, a telephone number, an age, a payment method (or account settlement method), and so forth for each of the users 12 is stored in the customer database 28 in a form of a database. The member ID is an identification number determined for each user 12 at a time of registration. The name is information of the name of each user 12. The address is information indicating the location of each user 12. The telephone number is information indicating the telephone number of the place of each user 12. The age is information indicating the age of each user 12. The payment method is information indicating a method of paying the fee charged (or settling the account) for a use of software. The payment method may be one by a credit card, one by bank transfer, or the like. The payment method includes, for example, the number of a credit card and so forth in a case of a payment method by the credit card. A certificate is issued for each user 12 who is registered in the customer database 28, and thereby the user 12 is permitted to use the application program.

In the used-condition database 29, information concerning a used condition as to how software provided to the users 12 from the entrepreneur 11 is used.

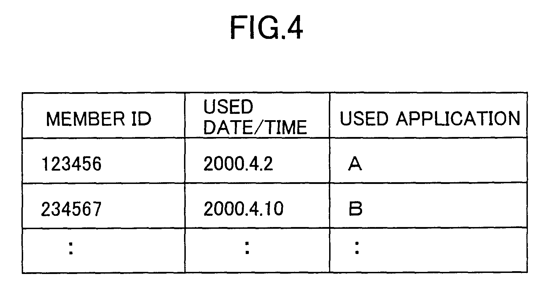

FIG. 4 shows a data configuration of the used-condition database 29.

The used-condition database 29 contains information such as the member IDs, used dates/times, used application programs, and so forth. The member IDs are the identification numbers of the users 12 who used the application programs. The used dates/times are information indicating the dates/times the users 12 used the application programs. The used application programs are information for identifying the application programs used. By using the used-condition database 29, accounting or charging is performed.

The program storage part 30 stores the accounting program read out from the CD-ROM 51 to be read and executed by the data processing part 22.

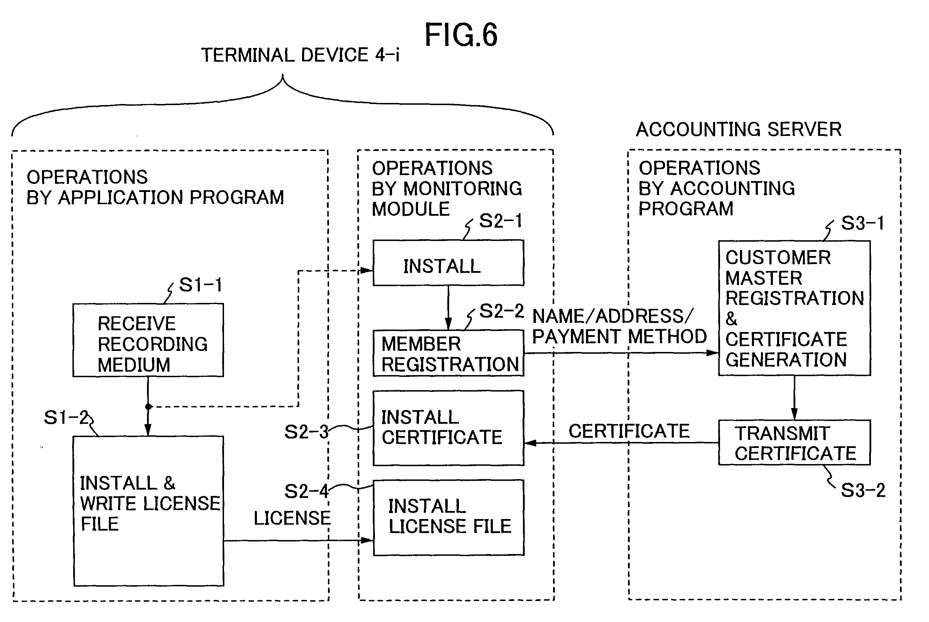

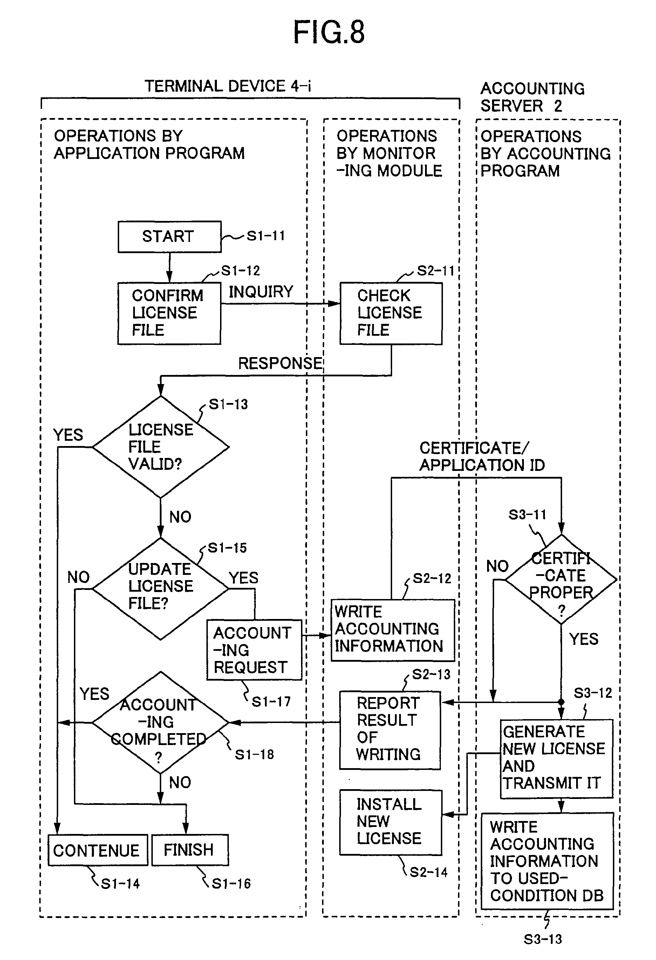

The data processing part 22 (including a CPU) executes the accounting program so as to perform processing according to the present invention which will be described later with reference to FIGS. 6 and 8.

The terminal devices 4-1 through 4-n will now be described.

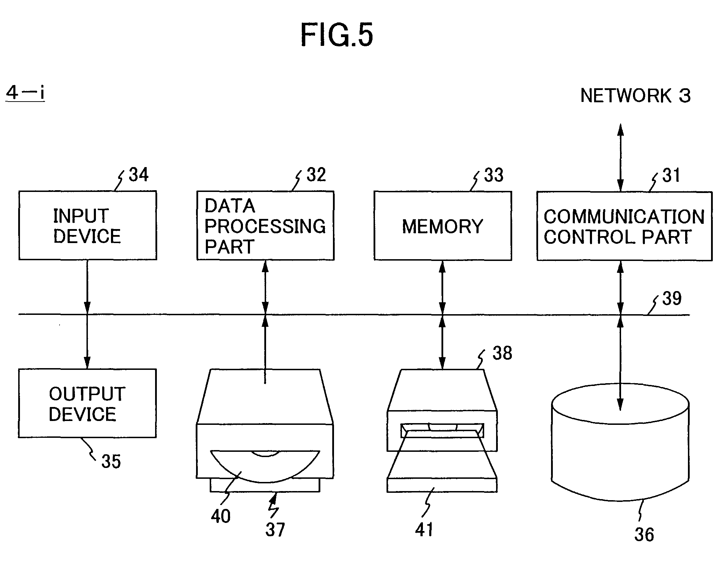

FIG. 5 shows a block diagram of each of the terminal devices 4-1 through 4-n.

The terminal device 4-i includes, as shown in FIG. 5, a communication control part 31, a data processing part 32, a memory 33, an input device 34, an output device 35, a storage device 36, a CD-ROM drive 37, a floppy disk drive 38 and a bus 39. The terminal 4-i is an arbitrary one of the terminal devices 4-1 through 4-n.

The communication control part 31 is connected to the network 3, and controls communication with the accounting server 2. The data processing part 32 executes the application program installed in the storage device 33. The memory 33 is used as a working area for the data processing device 32.

The input device 34 includes a keyboard, a mouse, and so forth, and is used for the user 12 to input instructions to start the application program, to input data, and so forth. The output device 25 includes a display device, a printer and so fourth, and outputs processing results from the data processing part 22 and so forth. The storage device 36 includes a hard disk drive, and stores therein the application program and data.

A CD-ROM 40 is loaded in the CD-ROM drive 37. The CD-ROM drive 37 reads data stored in the CD-ROM 40. A floppy disk 41 is loaded in the floppy disk drive 38. The floppy disk drive 38 magnetically records data in the floppy disk 41 and reads data magnetically recorded in the floppy disk 41.

The bus 39 transmits data and control signals between the communication control part 31, data processing part 32, memory 33, input device 34, output device 35, storage device 36, CD-ROM drive 37 and floppy disk drive 38.

The recording media 13 provided to the users 12 from the entrepreneur 11 comprise the CD-ROMs 40 or floppy disks 41. The application program stored in the CD-ROM 40 or floppy disk 41 is read through the CD-ROM drive 37 or floppy disk drive 38, and is installed in the storage device 36. The monitoring module which monitors use of the application program is also stored in the recording medium 13 together with the application program.

The data processing part (including a CPU) 32 executes the application program and monitoring module so as to perform processing according to the present invention which will be described later with reference to FIGS. 6 and 8.

The monitoring module is started when the application program is started, performs communication with the accounting server 2, and receives a permission to use the application program from the accounting server 2.

Operations of the embodiment of the present invention will now be described.

FIG. 6 is a flow chart showing operations of the embodiment of the present invention at a time of the registration.

A case where the recording medium 13 comprises the CD-ROM 40 will now be described.

The entrepreneur 11 provides to the user 12, free of charge, the recording medium 13 in which the application program and monitoring module into which accounting functions are incorporated are recorded.

The user 12 receives the recording medium 13 from the entrepreneur 11 in a step S1-1, and installs the application program into the terminal device 4-i in a step S1-2. When the monitoring module is not installed in the terminal device 4-i, the user 12 installs also the monitoring module into the terminal device 4-i in a step S2-1 at the same time.

Operations at a time of installing the monitoring module into the terminal device 4-i will now be described.

When installing the monitoring module in the step S2-1, a member registration picture is displayed on the output device 35 of the terminal device 4-i.

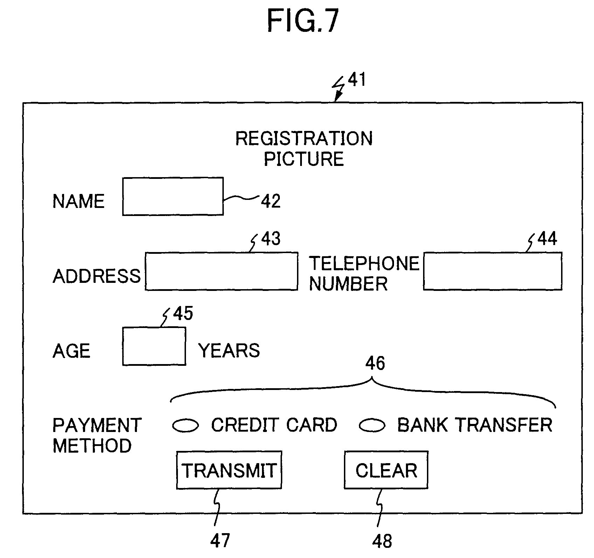

FIG. 7 shows an example of the member registration picture.

The member registration picture 41 includes a name inputting part 42, an address inputting part 43, a telephone number inputting part 44, an age inputting part 45, a payment method selecting part 46, a transmission button 47 and a clear button 48. In the name inputting part 42, the name of a person who is registered as a member is input through the keyboard of the input device 34. In the address inputting part 43, the address of this person is inputted through the keyboard of the input device 34. In the telephone number inputting part 44, the telephone number of the place of this person is input through the keyboard of the input device 34. In the age inputting part 45, the age of this person is inputted through the keyboard of the input device 34. In the payment method selecting part 46, a credit card selecting part 46a and a bank transfer selecting part 46b are set, for example. When the user 12 clicks the credit card selecting part 46a through the mouse of the input device 34, a payment method by a credit card is selected. When the user 12 clicks the bank transfer selecting part 46b through the mouse of the input device 34, a payment method by bank transfer is selected.

When the transmission button 47 is clicked after the name, address, telephone number and age are input and a payment method is selected, the thus-input information of the name, address, telephone number, age and payment method is transmitted to the accounting server 2 from the terminal device 4-i. When receiving the information of the name, address, telephone number, age and payment method from the terminal device 4-i, the accounting server 2 registers the received information into the customer database 28 shown in FIG. 3, and generates a certificate for the terminal device 4-i, in a step S3-1. For example, the certificate comprises a specific sequence of numbers.

The accounting server 2 transmits the certificate generated in the step S3-1, to the terminal device 4-i in a step S3-2.

When receiving the certificate from the accounting server 2, the terminal device 4-i installs the certificate into the monitoring module, in a step S2-3. Thereby, the monitoring module is made to be able to operate, and the application program is made to be able to operate.

When the entrepreneur 11 sets the application program provided on the recording medium 13 in a condition such that a trial of the application program can be made, a trial license file is written to the monitoring module when the application program is installed in the step S1-2.

The trial license file is a file in which trial conditions such as a trial term, and so forth are contained. In a case where the trial license file is written to the monitoring module, the monitoring module installs the trial license file into the terminal device 4-i in a step S2-4.

Thus, the user 12 is registered in the customer database 28 of the accounting server 2.

Operations at a time of executing the application program will now be described.

FIG. 8 illustrates operations of the embodiment of the present invention at a time the application program is executed.

In the terminal device 4-i, when accessing the contents for which determination is previously made to be charged for, the application program inquires the monitoring module to confirm as to the trial license file according to the accounting function incorporated by the entrepreneur 11, in a step S1-12. When being confirmed as to the trial license file made according to the accounting function of the application program, the monitoring module determines in a step S2-11 whether or not the trial license file is valid for the application program, and transmits the determination result to the application program. The determination made by the monitoring module for the validity of the trial license file includes, for example, a determination as to whether or not the trial term of the trial license file is over.

When receiving the determination result from the monitoring module, the application program determines from the received determination result whether or not the trial license file is valid for the application program, in a step S1-13. When determining from the received determination result that the trial license file is valid for the application program, the application program makes itself become executable, in a step S1-14.

When the determination result for the validity of the trail license file in the step S1-13 is that the trial license file is not valid, the application program determines in a step S1-15 whether or not the license file is to be updated. In the step S1-15, the application program displays a picture such as to question the user 12 as to whether or not the user 12 wishes to update the license file, on the display device of the output device 35 of the terminal device 4-i, and, makes the determination according to instructions given by the user 12 in response to the picture.

When the user 12 gives instructions not to update the license file in the step S1-15, it can be determined that the user 12 will not use the application program, and, therefore, the application program finishes the current processing in a step S1-16.

However, when the user 12 gives instructions to update the license file in the step S1-15, it can be determined that the user 12 will use the application program, and, therefore, the application program issues an accounting (charging) request to the monitoring module, in a step S1-17.

When the accounting request is issued by the application program, the monitoring module transmits the accounting request to the accounting server 2 in a step S2-12.

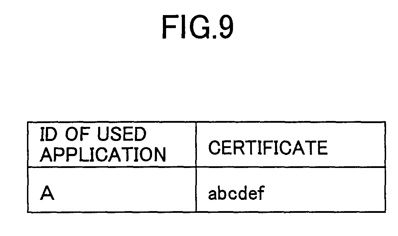

FIG. 9 shows a data configuration of the accounting information in the embodiment of the present invention.

As shown in FIG. 9, the accounting information includes an ID of the application program to be executed, and the certificate issued by the accounting server 2 in the step S3-2 and written to the monitoring module in the step S2-3 shown in FIG. 6.

When receiving the accounting information from the monitoring module, the accounting server 2 determines (or makes a check) in a step S3-11 whether or not the certificate of the accounting information is a proper one. The determination result in the step S3-11 is reported to the monitoring module.

When receiving the determination result from the accounting server 2, the monitoring module reports the received determination result to the application program in a step S2-13. When receiving the determination result from the monitoring module, the application program determines from the received determination result whether or not the accounting (charging operation) has been completed, in a step S1-18.

When determining in the step S1-18 that the accounting has been completed, the application program makes itself become executable in the step S1-14. However, when determining in the step S1-18 that the accounting has not been completed, this is a case where registration has not been completed or the certificate is not a proper one. Accordingly, the application program finishes the current processing in the step S1-16.

Further, when determining that the certificate is a proper one in the step S3-11, the accounting server 2 newly generates a license file, and transmits it to the monitoring module, in a step S3-12. When receiving the new license file from the accounting server 2, the monitoring module installs it in the terminal device 4-i in a step S2-14.

Further, when finishing the generation and transmission of the new license file in the step S3-12, the accounting server 2 stores the accounting information shown in FIG. 9 and information of the date/time into the used-condition database 29 shown in FIG. 4, in a step S3-13.

Charging the user 12 for using the contents through the application program is made according to the used-condition database 29 shown in FIG. 4.

In the present embodiment, the application programs are distributed free of charge, are installed in the terminal devices 4-1 through 4-n of the respective users 12, and the users 12 start the installed application programs. Thereby, the terminal devices 4-1 through 4-n perform communication with the accounting server 2 and fee charging operation (accounting) is performed, and, then, the terminal devices 4-1 through 4-n can execute the application program through their own operations. Accordingly, it is possible to reduce communication with the accounting server 2 to the limit.

Further, in the present embodiment, the starting of the processing is made only when the application program is started. However, it is possible that the license file is checked at predetermined intervals, then, fee charging (accounting) is made, and then the license file is updated. Thereby, fee charging (accounting) can be made for each unit of use time.

Further, a method of fee charging may be such that the monitoring module updates the license file, access is made to the accounting server 2 every predetermined number of times of the updating so that fee charging (accounting) is made. Thereby, it is possible to reduce the number of times of communication with the accounting server 2.

The present embodiment has been described assuming a case where the monitoring module is functioned as one of application programs. However, it is also possible that the monitoring module is incorporated into the OS, and is executed on the OS. At this time, the application program does not need to determine, each time of accessing the contents, whether or not these contents are ones to be charged for, and can perform normal operations. However, the OS needs to detect, from the application program, its accessing to the contents, and determine at this time whether or not these contents are ones to be charged for. After the determination, similarly to the above-described processing, accessing to the accounting server, and so forth, are performed.

Further, in the present embodiment, the application program is provided through the recording medium such as the CD-ROM or floppy disk. However, the application program may be provided via the network 3. Further, in the present embodiment, the case where the application program is executed has been described. However, it is not necessary to be limited to the case where the application program is executed, and the present invention can be applied widely to various contents provided by computers. Furthermore, the present invention can be applied to a case where contents to be charged for are accessed through the application program.

The present invention is not limited to the above-described embodiment, and variations and modifications may be made without departing from the scope of the present invention.

The present application is based on Japanese priority application No. 2000-131441, filed on April 28, 2000, the entire contents of which are hereby incorporated by reference.

## Claims

1. An accounting system comprising:
a part (32) reporting registration certification to an accounting server (2) from a terminal device (4-i) when contents to be charged for are accessed in the terminal device which is previously registered in said accounting server;
a part (22) confirming properlity of the reported registration certification in said accounting server, and performing fee charging; and
a part (22), when the properlity of the registration certification is confirmed, reporting permission of access to the contents, from said accounting server to said terminal device, and making the contents accessible in said terminal device.

2. An accounting method comprising the steps of:
a) reporting registration certification to an accounting server (2) from a terminal device (4-i) when contents to be charged for are accessed in said terminal device which is previously registered in said accounting server;
b) confirming properlity of the reported registration certification in said accounting server, and performing fee charging; and
c) when the properlity of the registration certification is confirmed, reporting permission of access to the contents, from said accounting server to said terminal device, and making the contents accessible in said terminal device.

3. An accounting method comprising the steps of:
a) determining whether or not a condition for accessing contents is satisfied, when the contents are accessed; and
b) enabling the access to the contents when the condition for accessing the contents is satisfied, and enabling the access to the contents after performing fee charging when the condition for accessing the contents is not satisfied.

4. An accounting method comprising the steps of:
a) determining whether or not a condition for accessing contents is satisfied;
b) reporting fee charging to an accounting server (2) when the condition for accessing the contents is not satisfied; and
c) updating from said accounting server the condition for accessing the contents into a condition such that the contents can be accessed.

5. An accounting method comprising the steps of:
a) receiving a certificate previously issued for registration information of a terminal device (4-i), and determining whether or not the certificate is valid;
b) transmitting the determination result of said step a) to said terminal device, generating information indicating that a condition for accessing contents is satisfied when the determination result is that the certificate is valid, and transmitting the generated information to said terminal device; and
c) charging said terminal device.

6. A content executing device comprising:
a determining part (32) determining whether or not a condition for accessing contents is satisfied, when the contents are accessed; and
an access control part (32) enabling the access to the contents when the condition for accessing the contents is satisfied as a result of the determination by said determining part, and enabling the access to the contents after performing fee charging when the condition for accessing the contents is not satisfied.

7. An accounting monitoring device comprising:
a determining part (32) determining whether or not a condition for accessing contents is satisfied;
an accounting reporting part (32) reporting fee charging to an accounting server (2) when the condition for accessing the contents is not satisfied as a result of the determination result of said determining part; and
a updating part (32) updating, by a condition for accessing the contents, provided from said accounting server, the condition for accessing the contents so that the contents can be accessed.

8. The accounting monitoring device as claimed in claim 7, wherein said determining part, accounting reporting part and updating part are achieved on an OS of a terminal device (4-i).

9. An accounting control device comprising:
a certificate determining part (22) receiving a certificate previously issued for registration information of a terminal device (4-i), and determining whether or not the certificate is valid;
an information updating part (22) transmitting the determination result from said certificate determining part to said terminal device, generating information indicating that a condition for accessing contents is satisfied when the determination result is that the certificate is valid, and transmitting the generated information to said terminal device; and
an accounting part (22) charging said terminal device.

10. A computer-readable recording medium storing therein a program causing a computer to execute the steps of;
a) determining whether or not a condition for accessing contents is satisfied, when the contents are accessed; and
b) enabling the access to the contents when the condition for accessing the contents is satisfied as a result of the determination made in said step a), and enabling the access to the contents after performing fee charging when the condition for accessing the contents is not satisfied.

11. A computer-readable recording medium storing therein a program causing a computer to execute the steps of;
a) determining whether or not a condition for accessing contents is satisfied;
b) reporting fee charging to an accounting server (2) when the condition for accessing the contents is not satisfied as a result of the determination in said step a); and
c) updating, by a condition for accessing the contents, provided from said accounting server, the condition for accessing the contents so that the contents can be accessed.

12. The recording medium as claimed in claim 11, wherein said steps a), b) and c) are executed on an operating system of said computer.

13. A computer-readable recording medium storing therein a program causing a computer to execute the steps of;
a) receiving a certificate previously issued for registration information of a terminal device (4-i), and determining whether or not the certificate is valid;
b) transmitting the determination result of said step a) to said terminal device, generating information indicating that a condition for accessing contents is satisfied when the determination result is that the certificate is valid, and transmitting the generated information to said terminal device; and
c) charging said terminal device.
